Europäisches Patentamt

European Patent Office

Office européen des brevets

(19)

(11) Veröffentlichungsnummer : **0 350 829 B1**

(12) **EUROPÄISCHE PATENTSCHRIFT**

(45) Veröffentlichungstag der Patentschrift :
29.11.95 Patentblatt 95/48

(51) Int. Cl.$^6$ : **H01H 71/10, H02H 3/02**

(21) Anmeldenummer : **89112564.3**

(22) Anmeldetag : **10.07.89**

(54) **Selektive Kurzschlussstromschutzeinrichtung.**

(30) Priorität : **15.07.88 DE 3823975**

(43) Veröffentlichungstag der Anmeldung :
**17.01.90 Patentblatt 90/03**

(45) Bekanntmachung des Hinweises auf die
Patenterteilung :
**29.11.95 Patentblatt 95/48**

(84) Benannte Vertragsstaaten :
**AT BE CH DE FR GB IT LI**

(56) Entgegenhaltungen :
**EP-A- 0 042 113**
**EP-A- 0 043 020**
**DE-A- 3 137 727**
**DE-A- 3 316 230**

(73) Patentinhaber : **Asea Brown Boveri**
**Aktiengesellschaft**
**Kallstadter Strasse 1**
**D-68309 Mannheim (DE)**

(72) Erfinder : **Runtsch, Erhard**
**Karlsbader Strasse 17**
**D-6944 Hemsbach (DE)**
Erfinder : **Velten, Walter**
**Carl-Goerdeler Strasse 1**
**D-6830 Schwetzingen (DE)**
Erfinder : **Goehle, Rolf**
**Im Bubenwingert 16**
**D-6906 Leimen (DE)**
Erfinder : **Schmitt, Hermann**
**Im Vogelskorb 1**
**D-6803 Edingen-Neckarhausen (DE)**
Erfinder : **Greefe, Klaus**
**Hausserstrasse 55**
**D-6900 Heidelberg (DE)**
Erfinder : **Dymke, Dietmar**
**Maria-Probst-Strasse 15**
**D-6903 Neckargemünd (DE)**

(74) Vertreter : **Rupprecht, Klaus, Dipl.-Ing. et al**
**c/o ABB Patent GmbH,**
**Postfach 10 03 51**
**D-68128 Mannheim (DE)**

## Beschreibung

Die Erfindung betrifft einen selektiven Hauptsicherungsautomat gemäß dem Oberbegriff des Anspruches 1.

Ein derartiger selektiver Hauptsicherungsautomat dient zur selektiv gestaffelten Absicherung von einzeln abgesicherten Verbrauchern eines Verbrauchernetzes gegen Überströme in einem Verbraucherstromkreis und ist selektiv gegenüber den übrigen Verbrauchern. Er besitzt einen Hauptstrompfad sowie einen hierzu parallel geschalteten Nebenstrompfad mit einer im Hauptstrompfad angeordneten Hauptkontaktstelle, die wenigstens ein festes und ein bewegliches Kontaktstück sowie je eine zugehörige Lichtbogenlöscheinrichtung aufweist. Weiterhin besitzt ein derartiger Hauptsicherungsautomat einen ebenfalls im Hauptstrompfad angeordneten elektromagnetischen Schnellauslöser, der mit einem Hauptschaltwerk zusammenarbeitet, welches mit dem beweglichen Kontaktstück der Hauptkontaktstelle sowie mit einem Handschaltgriff und mit einem im Hauptstrompfad angeordneten Überstromauslöser in Wirkverbindung steht und das bewegliche Kontaktstück der Hauptkontaktstelle beaufschlagt und mit je einer zugangsseitigen und einer abgangsseitigen Anschlußklemme ausgerüstet ist.

Die vorgeordnete Absicherung von Verbrauchernetzen, welche einzeln abgesicherte Verbraucher aufweisen, wird im wesentlichen auch heute noch durch Schmelzsicherungen (NH-Sicherungen) erreicht. Diese Art der Absicherung hat den Nachteil, daß bei Auftreten eines Kurzschlusses in einem Verbraucher bei nicht gegebener Selektivität durch Ansprechen der Hauptsicherung das gesamte Verbrauchernetz vom Versorgungsnetz abgetrennt wird. Darüberhinaus ist das Auswechseln der NH-Sicherung durch den Anwender nicht durchführbar.

Zur Vermeidung dieses Nachteils wurden selektive Hauptsicherungsautomaten entwickelt, welche wie die zuvor erwähnten Schmelzsicherungen den einzeln abgesicherten Verbrauchern, die in Verbrauchernetzen zusammengefaßt sein können, vorgeschaltet sind und bei Auftreten eines Hurzschlußstromes in einem der Verbraucher ansprechen und die Strombegrenzung des dem Verbraucher zugeordneten LS-Schalters unterstützen, jedoch nicht auslösen, falls der Kurzschluß von dem LS-Schalter selektiv abgeschaltet wird.

Ein derartiger selektiver Hauptsicherungsautomat ist aus der DE-C2-28 54 616 bekannt geworden, bei dem der Kurzschlußstrom in einem hochohmigen Nebenstrompfad geführt wird, der sich parallel zu einem der beiden Hauptkontakte befindet, welche nach Überschreitung eines bestimmten Stromes von einer vom Kurzschlußstrom durchflossenen Spule aufgeschlagen werden.

Hat ein nachgeschalteter Leitungsschutzschalter den Kurzschlußstrom nicht abgeschaltet, so fließt der Kurzschlußstrom weiter. Wenn die Öffnungskraft der Schlagspule des elektromagnetischen Schnellauslösers im Bereich des Nulldurchgangs unter die Kontaktschließkräfte absinkt, erfolgt ein Wiederschließen der Kontakte, so daß ein weiteres Öffnen erst nach Überschreiten des Ansprechwertes der Schlagspule während der nächsten Halbwelle stattfinden kann.

Im Nebenstrompfad befindet sich ein empfindliches Thermobimetall, welches durch diesen iterativ wirksamen Kurzschlußstrom aufgeheizt wird und schließlich die endgültige Kontaktöffnung herbeiführt.

Obwohl mit Hilfe dieses selektiv wirksamen Hauptsicherungsautomaten die Nachteile der vorher üblichen Schmelzsicherungen vermieden werden, führt das mehrmalige Öffnen und Schließen der Hauptkontakte während einer Kurzschlußstromabschaltung in einem bestimmten Kurzschlußstrombereich zu höheren Durchlaß-$I^2$-t-Werten.

Aus der EP-A1-0 043 020 ist ein elektrisches Installationsgerät, insbesondere ein Selbstschalter bzw. Leitungsschutzschalter ggf. mit Selektivschutz bekannt geworden. Dieser Schalter besitzt eine erste Kontaktstelle, der ein elektromagnetisches System zugeordnet ist, mit dem bei Auftreten eines Kurzschlusses die Kontaktstelle geöffnet wird. Wenn dieser Kurzschluß nicht mehr existiert, wird sich nach Beendigung des Lichtbogenlöschvorganges an der Kontaktstelle die Kontaktstelle wieder schließen und erst dann, wenn der Kurzschlußstrom noch weiter existiert, wird das bewegliche Kontaktstück in die Ausschaltstellung gebracht und gelangt dort mit einer von dem Kurzschlußstrom betätigten Rastanordnung in Verbindung, so daß das bewegliche Kontaktstück in Ausschaltstellung festgehalten ist. Damit wird die Verrastung angesteuert, so daß das bewegliche Kontaktstück in der Ausschaltstellung überhaupt erst verrasten kann.

Aus der DE-A1-33 16 230 ist ein Leitungs- und/oder Geräteschutzschalter gegen Überstrom und Kurzschluß bekannt geworden, der einen Hauptstromweg aufweist, der mittels eines auf Kurzschluß ansprechenden, schnelleren Bewegungsmechanismus sowie mittels eines auf Überstrom ansprechenden langsameren Bewegungsmechanismus trennbar ist. Diesem Hauptstromweg ist ein Nebenstromweg zugeordnet, über den der Strom nach einer Öffnung der Hauptkontaktstelle fließt, wobei in diesem Nebenstrompfad lediglich ein thermischer Auslöser untergebracht ist, der in der Beschreibung als langsamerer Bewegungsmechanismus bezeichnet ist. Darüberhinaus ist ein weiterer Strompfad vorgesehen, der zum Nulleiter abzweigt und zusätzlich zu der Trennstelle im Hauptstrompfad und der Trennstelle im Nebenstrompfad eine weitere Trennstelle aufweist, die mit der Haupttrennstelle im Hauptstrompfad derart gekoppelt ist, daß sie bei deren durch den schnelleren Bewegungsmechanismus bewirkten Öffnungsvorgang schließt.

Ein Hauptsicherungsautomat gemäß dem Oberbegriff des Anspruchs 1 ist aus der DE-A1-31 37 727 bekannt geworden. Bei dieser Anordnung hält ausschließlich der magnetische Auslöser die Schaltvorrichtung offen, und erst dann, wenn der thermische Auslöser anspricht und das Schaltschloß entklinkt, wird die Schaltkontaktvorrichtung endgültig offen gehalten.

Aufgabe der Erfindung ist es, einen Hauptsicherungsautomaten der eingangs genannten Art zu schaffen, bei dem der Platzbedarf gering ist und bei dem das Festhalten bzw. Verrasten des beweglichen Kontaktstückes vereinfacht ist.

Diese Aufgabe wird erfindungsgemäß gelöst durch die Merkmale des Anspruches 1.

Als weiterhin anstehender Kurzschlußstrom wird hierbei ein solcher Kurzschlußstrom verstanden, der während der ersten Halbwelle mit seinem Auftreten noch nicht abgeschaltet ist, z. B. im 50 Hz-Netz 10 ms.

Der Hauptsicherungsautomat nach der oben gewürdigten DE-A1-31 37 727 besitzt eine Rastvorrichtung ähnlich derjenigen der Erfindung, in der das infolge Hurzschluß aufgeschlagene bewegliche Kontaktstück der Hauptkontaktstelle einrastet und eine mit der Rastvorrichtung zusammenarbeitende Selektivitätseinrichtung, nicht.

Zwar ist bei dem Installationsgerät nach der EP-A1-0 043 020 eine Rastvorrichtung vorhanden; bei dieser wird aber nicht eine zeitgesteuerte Entrastung des beweglichen Kontaktstückes hervorgerufen, sondern die Verrastungseinrichtung wird so angesteuert, daß sie das bewegliche Kontaktstück überhaupt erst verrasten kann.

Weitere vorteilhafte Ausgestaltungen und Verbesserungen der Erfindung sind den Unteransprüchen zu entnehmen.

Gemäß kennzeichnenden Merkmalen des Anspruches 2 kann die Selektivitätseinrichtung eine Zeitsteuereinrichtung enthalten, die von einer im Nebenstrompfad angeordneten Spule angeregt wird und auf eine Entrastungseinrichtung wirkt, welche ihrerseits die Entrastung des beweglichen Kontaktstückes der Hauptkontaktstelle aus der Rastvorrichtung herbeiführt, wobei die Spule in Stromflußrichtung zwischen dem Abzweigpunkt im Hauptstrompfad und dem zweiten Überstromauslöser im Nebenstrompfad angeordnet ist. Die Spule ist gemäß kennzeichnenden Merkmalen des Anspruches 5 als Spannungsspule ausgelegt, d. h. ihre Windungszahl ist so festgelegt, daß sie ähnlich einer Drosselspule einen hohen Widerstand bildet und erst bei einer Stromstärke, die oberhalb der Nennstromstärke liegt, für die der Hauptsicherungsautomat ausgelegt ist, erregt wird.

Wenn der zweite, im Nebenstrompfad angeordnete kurzzeitverzögerte Überstromauslöser, der mit der Spule der Selektivitätseinrichtung elektrisch in Reihe geschaltet ist, als Bimetall ausgebildet ist, dann wird dadurch erreicht, daß die für den wegen der geöffneten Hauptkontaktstelle vom Hauptstrompfad in den Nebenstrompfad geleiteten Kurzschlußstrom als Vorwiderstand wirkende Spule der Selektivitätseinrichtung einen Spannungsabfall bewirkt, so daß der Überstromauslöser mit einem verringerten Kurzschlußstrom belastet ist. Je nach gewünschter Selektivität kann der Überstromauslöser durch entsprechende Dimensionierung seiner Abmessungen sowie durch entsprechende Werkstoffwahl ausgelegt werden.

Die weitere Kontaktstelle im Nebenstrompfad, die gemäß Anspruch 3 zwischen dem zweiten Überstromauslöser und der abgangsseitigen Anschlußklemme angeordnet ist, führt bei geöffneter Hauptkontaktstelle den gesamten Reststrom zum Verbrauchernetz.

Im Falle, daß der Leitungsschutzschalter des nachgeschalteten, kurzschlußführenden Verbrauchers nicht oder nicht rechtzeitig anspricht, erfolgt durch den weiteren Überstromauslöser im Nebenstrompfad die Auslösung des Hauptschaltwerkes, mit dem er in Wirkverbindung steht. Hierbei wird die weitere im Nebenstrompfad befindliche Kontaktstelle vom Hauptschaltwerk geöffnet, sowie die im Hauptstrompfad befindliche Hauptkontaktstelle in die endgültige "Aus"-Stellung gebracht, so daß es zur Trennung des Verbrauchernetzes vom Versorgungsnetz kommt und der Kurzschlußstrom engültig abgeschaltet ist.

In Übereinstimmung mit bestehenden Vorschriften ist dabei vorgesehen, daß diese endgültige Trennung des Verbrauchernetzes vom Versorgungsnetz nur durch manuellen Eingriff, d. h. durch Betätigung des am Hauptsicherungsautometen befindlichen Handschaltgriffes, aufgehoben werden kann.

Gemäß den kennzeichnenden Merkmalen des Anspruches 4 ist vorgesehen, daß der erwähnte Handschaltgriff, der mit dem Hauptschaltwerk zusammenarbeitet, auch mit der Zeitverzögerungseinrichtung der Selektivitätseinrichtung gekoppelt ist.

Die Rastvorrichtung ist als mechanische Fangvorrichtung für die beweglichen Teile der Hauptkontaktstelle ausgestaltet, welche die Kontakte in mindestens einer Position zwischen der "Ein"- und "Aus"-Stellung festhält. Die "Aus"-Stellung des beweglichen Kontaktstückes der Hauptkontaktstelle wird danach sowohl durch die Auslösung des Schalters aufgrund eines Kurzschlusses als auch mit Hilfe des Handschaltgriffes erreicht.

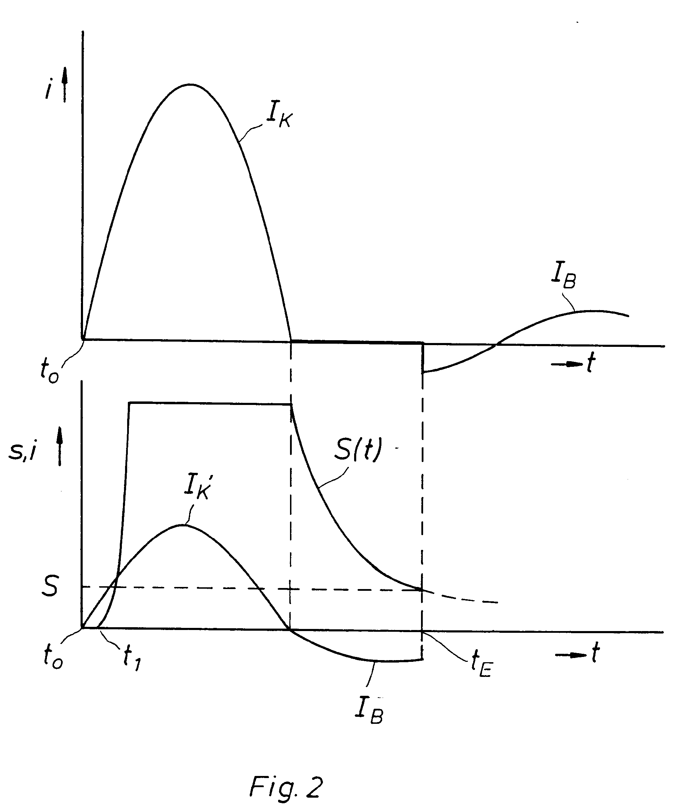

Die Zeitverzögerungseinrichtung der Selektivitätseinrichtung besitzt eine Energie/Zeit-Charakteristik entsprechend dem in Fig. 2 gezeigten Kurvenverlauf s(t). Dabei ist vorgesehen, daß entsprechen der hochohmigen Auslegung der Erregerspule der Selektivitätseinrichtung diese erst bei Erreichen eines Stromwertes ausgelöst wird, der oberhalb der Nennstromstärke liegt. Mit der Auslösung der Zeitverzögerungseinrichtung durch den Anker der Erregerspule der Selektivitätseinrichtung erfolgt ein Speichervorgang mit sehr steilem Anstieg auf ein festgelegtes Niveau, welches eine halbe Periode lang entsprechend der Dauer einer Halbwelle, gehalten wird. Danach erfolgt eine Entladung mit exponentiellem zeitlichem Verlauf.

Dieses Verhalten gilt dann, wenn der Kurzschlußstrom innerhalb der ersten Halbwelle abgeschaltet wird. Nach einer vorgegebenen Zeit $t_E$ entsprechend dem zeitlichen Verlauf der Abklingkurve der Zeitsteuereinrichtung betätigt diese die mit ihr gekoppelte Entrastungsvorrichtung, wodurch die Entrastung der in der Rastvorrichtung gehaltenen beweglichen Kontaktstücke der Hauptkontaktstelle ausgelöst wird, so daß diese wieder schließen kann und der normale Betriebszustand wieder hergestellt ist.

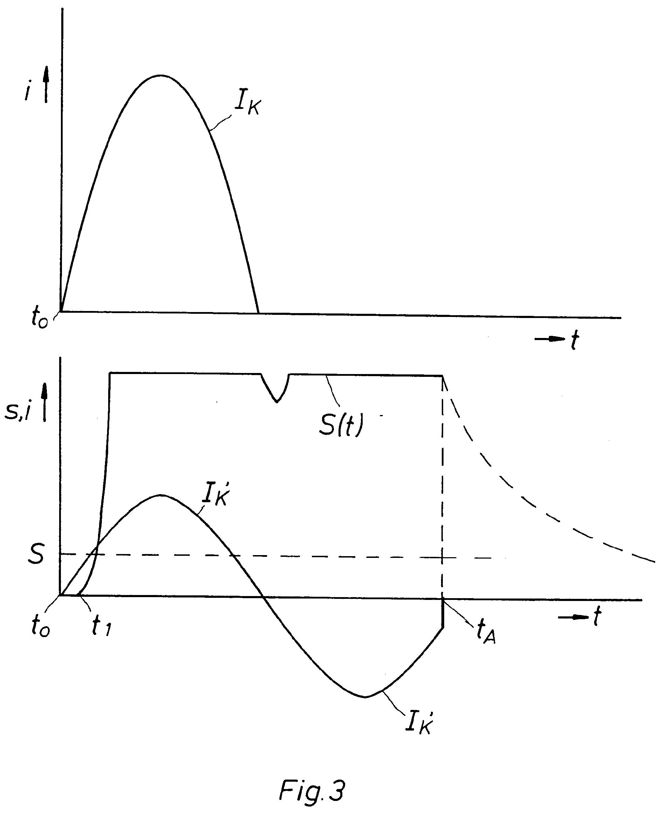

Ist der Kurzschluß nach der ersten Halbwelle noch nicht abgeschaltet, so erfolgt eine erneute Aktivierung der Zeitsteuereinrichtung während der zweiten Halbwelle. Dies verhindert das Absinken ihrer Kennlinie unter das Auslöseniveau und damit das Schließen der Hauptkontaktstelle (Fig. 3).

Einhergehend mit den zuvor beschriebenen Vorgängen in der Selektivitätseinrichtung wird der im Nebenstrompfad befindliche zweite Überstromauslöser, der vorteilhafterweise als Thermobimetall ausgeführt ist, durch Joulsche Wärme aufgeheizt.

Als Auslegungsbedingung für dieses Thermobimetall im Hinblick auf den Betriebsfall gilt

$$\text{Aulöse-}I^2 t \; > \; \int_0^{t_v} I^2 t\,dt,$$

damit es nicht zur ungewollten Auslösung des Schaltwerkes kommt. Erreicht der Strom/Zeit-Verlauf aufgrund eines anstehenden Kurzschlußstromes das Auslöseintegral entsprechend der Dimensionierung, so erfolgt nach einer Zeit $t_A$ die Entklinkung des Schaltwerkes und hierdurch die ganze Öffnung der Hauptkontaktstelle im Nebenstrompfad. Hierdurch wird das Verbrauchernetz vom Versorgungsnetz getrennt und der Kurzschlußstrom endgültig abgeschaltet.

Gemäß Anspruch 6 kann die Selektivitätseinrichtung entweder eine mechanisch arbeitende oder eine aus elektronischen Bauelementen gebildete Zeitsteuereinrichtung aufweisen.

In vorteilhafter Ausgestaltung gemäß Anspruch 7 kann vorgesehen sein, daß, insbesondere um eine gefahrlose Bedienung des Schalters beim Einschalten auf einen Kurzschlußstrom zu gewährleisten, die Hauptkontakte, wie bereits erwähnt, auch beim manuellen Einschalten von der Rastvorrichtung in einer Zwischenstellung gehalten werden und gleichzeitig der Trennkontakt im Nebenstrompfad geschlossen wird, so daß im ersten Augenblick nach dem Einschalten ein Stromfluß nur über den Nebenstrompfad, nicht aber über die Hauptkontaktstelle möglich ist. Dabei kann die Aktivierung der Selektivitätseinrichtung durch ihre Spule erst bei einer Stromstärke erfolgen, die höher liegt als die Nennstromstärke.

Bei Auslösung durch den elektromagnetischen Schnellauslöser werden vom Schaltwerk sowohl die Hauptkontaktstelle als auch die Nebenkontaktstelle im Nebenstrompfad umgehend geöffnet und zwar unabhängig von der Selektivitätseinrichtung.

Anhand eines in der Zeichnung dargestellten Ausführungsbeispieles sollen die Erfindung, vorteilhafte Ausgestaltungen und Verbesserungen und weitere Vorteile der Erfindung näher erläutert und beschrieben werden.

Es zeigen:

Figur 1    Die Anordnung eines Selbstschalterkaskadennetzes,

Figur 2    ein Diagramm der zeitlichen Verläufe der Ströme in Haupt- bzw. Nebenstrompfad sowie der Zeitsteuereinrichtung bei einem Kurzschluß, der von einem LS-Schalter abgeschaltet wird,

Figur 3    das Diagramm der zeitlichen Verläufe der Ströme im Haupt- bzw. Nebenstrompfad sowie der Zeitsteuereinrichtung bei länger anstehendem Kurzschluß und dessen Abschaltung,

Figur 4    Prinzipschaltbild des erfindungsgemäßen Hauptsicherungsautomaten.

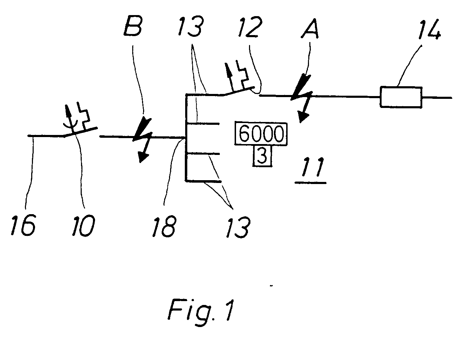

In Figur 1 ist die Anordnung eines Selbstschalterkaskadennetzes mit einem Hauptsicherungsautomaten 10 sowie nachgeschalteten Leitungsschutzschaltern 12 gezeigt, welche zum Schutz gegen Überlast- und Kurzschlußströme zwischen Verbrauchern 14 und einem Versorgungsnetz 16 angeordnet sind. Dabei ist vorgesehen, daß mehrere Verbraucher 14 jeweils einzeln durch Leitungsschutzschalter 12 abgesichert sind und mehrere so gebildete Verbrauchernetze 13 in einem gemeinsamen Verzweigungspunkt 18 zusammengeführt sind, der über den Hauptsicherungsautomaten 10 mit dem Versorgungsnetz 16 verbunden ist.

In der in Figur 1 gezeigten Darstellung sind zwei mit den Buchstaben A und B bezeichnete Möglichkeiten für das Auftreten von Kurzschlußströmen dargestellt. Im ersten Fall, der mit dem Buchstaben A gekennzeichnet ist, tritt ein Kurzschluß in einem Verbraucher 14 auf, der durch einen Leitungsschutzschalter 12 abgesichert ist. Die übrigen Verbrauchernetze 13 befinden sich hierbei im Normalbetrieb, d. h., dort ist kein Kurzschluß.

Im zweiten Fall tritt ein Kurzschluß zwischen dem Verzweigungspunkt 18 und dem Hauptsicherungsautomaten 10 auf, der daraufhin anspricht und das gesamte Kaskadennetz 11 mit den Verbrauchern 14 vom Versorgungsnetz 16 trennt.

Unter Umständen ist es möglich, daß bei Auftreten eines Kurzschlußfalles A der zugeordnete Leitungsschutzschalter 12 nur verzögert anspricht, so daß der Hauptsicherungsautomat 10 anspricht und so, wie zuvor für den Kurzschlußfall B beschrieben, das gesamte Kaskadennetz 11 mit den Verbrauchern 14 vom Versorgungsnetz 16 abtrennt.

In Figur 2 ist der zeitliche Verlauf einer im erfindungsgemäßen Hauptsicherungsautomaten 10 verwendeten Zeitsteuereinrichtung mit den entsprechenden Stromverläufen darstellt. Die Abszisse dient als Zeitachse, während auf der Ordinate das entsprechende Energieniveau aufgetragen ist. Für die aufgetragenen Ströme ist es die Stromstärke.

Mit $I_K$ ist der Kurzschlußstromverlauf im Hauptstrompfad und mit $I_K'$ der gedämpfte Kurzschlußstromverlauf im Nebenstrompfad dargestellt. $I_B$ zeigt den Betriebsstromverlauf. Mit s(t) ist der zeitliche Verlauf der Zeitsteuereinrichtung gekennzeichnet.

In figur 3 ist ebenfalls der zeitliche Verlauf der Zeitsteuereinrichtung hier jedoch für einen länger anstehenden Kurzschlußstrom $I_K$ dargstellt. Die Bezeichnungen der weiteren dargstellten Kurvenverläufe entspricht der in der Figur 2.

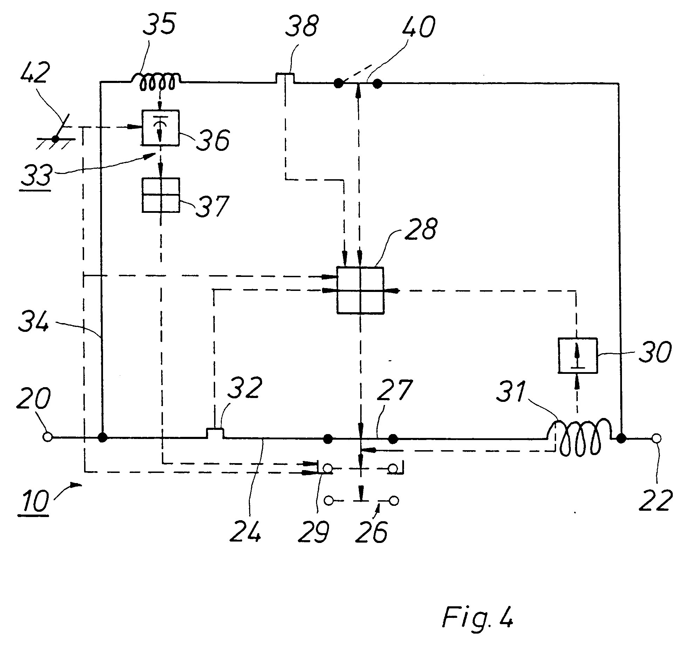

Bevor auf die Kurvendarstellung näher eingegangen werden soll, ist es zweckmäßig, den prinzipiellen Schaltungsaufbau des erfindungsgemäßen Hauptsicherungsautomaten 10 zu erläutern. Dieser Schaltungsaufbau ist in Figur 4 gezeigt.

Der Hauptsicherungsautomat 10, dessen Schaltungsaufbau in Figur 4 gezeigt ist, besitzt eine zugangsseitige Anschlußklemme 20 und eine abgangsseitige Anschlußklemme 22, welche von einem Hauptstrompfad 24 miteinander verbunden sind. In diesem Hauptstrompfad 24 ist eine Hauptkontaktstelle 26 angeordnet. Zur Betätigung der Hauptkontaktstelle 26 ist ein Hauptschaltwerk 28 vorgesehen, das von einem in Energieflußrichtung hinter der Hauptkontaktstelle 26 im Hauptstrompfad 24 angeordneten elektromagnetischen Schnellauslöser 30 beaufschlagbar ist. Die Magnetspule 31 des elektromagnetischen Schnellauslösers ist dabei zwischen der Hauptkontaktstelle 26 und der abgangseitigen Anschlußklemme 22 in den Hauptstrompfad 24 eingeschaltet.

In besonderer Ausgestaltung der Erfindung ist vorgesehen, daß ein hier nicht näher gezeigter in der Auslösespule 31 des elektromagnetischen Schnellauslösers 30 geführter Schlaganker unmittelbar auf die Hauptkontaktstelle 26 einwirkt.

Außerdem ist in den Hauptstrompfad 24 zwischen der zugangsseitigen Anschlußklemme 20 und der Hauptkontaktstelle 26 ein Überstromauslöser 32 angeordnet, der ebenfalls mit dem Hauptschaltwerk 28 zusammenarbeitet.

An den Anschlußklemmen 20, 22 ist ein zum Hauptstrompfad 24 elektrisch parallel geschalteter Nebenstrompfad 34 angeschlossen, in dessen Leitungsweg eine Spule 35 einer Zeitsteuerungseinrichtung 36, ein zweiter Überstromauslöser 38 sowie eine weitere Kontaktstelle 40 angeordnet sind.

Die weitere Kontaktstelle 40 steht in Wirkverbindung mit dem Hauptschaltwerk 28 und kann von dem zweiten Überstromauslöser 38, die ebenfalls das Hauptschaltwerk 28 beaufschlagt, zur Öffnung gebracht werden.

Die Hauptkontaktstelle 26 besitzt ein bewegliches Kontaktstück 27, welches in einer erfindungsgemäß vorgesehenen Rastvorrichtung 29 beim Öffnen durch die Auslösespule 31 in einer Position zwischen der Schließ- und der Offenstellung einrastet.

Mit der Rastvorrichtung 29 gekoppelt ist eine Entrastungseinrichtung 37, die zur Zeitsteurereinrichtung 36 gehört und von dieser betätigt wird.

Um auch die manuelle Betätigung des erfindungsgemäßen Hauptsicherungsautomaten 10 sicherzustellen, ist ein Handschaltgriff 42 vorgesehen, der in Wirkverbindung mit dem Hauptschaltwerk 28 sowie mit der Zeitsteuereinrichtung 36 und der Rastvorrichtung 29 steht.

Nun soll die Funktion des Hauptsicherungsautomaten 10 unter Bezugnahme auf die Figuren 2 bzw. 3 sowie 4 erläutert werden.

Im Nennbetrieb fließt der Betriebsstrom $I_B$ von der zugangsseitigen Anschlußklemme 20, die mit dem Versorgungsnetz 16 verbunden ist, über dem Hauptstrompfad 24 zur abgangsseitigen Anschlußklemme 22, an welche die einzelnen Verbrauchernetze 13 anschließen. Hierbei ist die Hauptkontaktstelle 26 geschlossen. Bei Auftreten eines Kurzschlußstromes, der, wie in Figur 1 angedeutet, sowohl in einem Verbraucher 14 als auch zwischen dem Hauptsicherungsautomaten und dem gemeinsamen Verzweigungspunkt 18, von dem die Verbrauchernetze 13 gespeist werden, vorliegen kann, wird die Auslösespule 31 des elektromagnetischen Schnellauslösers 30 erregt, wodurch unmittelbar die Hauptkontaktstelle 26 geöffnet wird und das bewegliche Kontaktsück 27 bei seiner Öffnungsbewegung in der Rastvorrichtung 29 einrastet. Damit ist der Hauptstrompfad 24 unterbrochen.

Der gedämpfte Kurzschlußstrom, der in den Figuren 2 und 3 mit $I_K'$ gekennzeichnet ist, fließt durch den hochohmigen Nebenstrompfad 34, der aus der elektrischen Reihenschaltung der als Spannungsspule ausgelegten Spule 35, des Zeitsteuerungsgliedes 36, des zweiten Überlastauslösers 38 sowie der Kontaktstelle 40 aufgebaut ist.

Das Auslöseverhalten der Spule 35 der Zeitsteuereinrichtung 36 ist durch den Kurvenverlauf s (t) in den Figuren 2 und 3 wie folgt gekennzeichnet:

Ein infolge Kurzschluß in den Nebenstrompfad 34 geleiteter Kurzschlußstrom beginnt bei $t_0$ die erste Halbwelle, die einem Maximalwert zustrebt. Bei $t_1$ erreicht die Stromstärke des Kurzschlußstromes $I_K$ einen Schwellwert der höher liegt als Ansprechstromstärke die und wenigstens zur Erregung der Spule 35 der Zeitsteuereinrichtung 36 erforderlich ist. Bei $t_1$ wird demgemäß durch Erregung der Spule 35 die Zeitsteuereinrichtung 36 aktiviert und mit steilem Anstieg auf ein vorgegebenes Energieniveau gebracht. Dieses Energieniveau wird gehalten, solange der gedämpfte Kurzschlußstrom $I_K'$ andauert. Danach wird ein Entladungsvorgang der Zeitsteuereinrichtung 36 eingeleitet, der einen exponentiellen Verlauf hat und in der Kurvendarstellung in Figur 2 als durchgezogene abfallende Linie dargestellt ist.

Wenn der Kurzschlußstrom innerhalb der ersten Halbwelle durch den dem Hauptsicherungsautomaten nachgeschalteten Leitungsschutzschalter des kurzschlußführenden Verbrauchernetzes 13 abgeschaltet ist, so verhält sich die Zeitsteuereinrichtung gemäß dem in Figur 2 dargestellten Kurvenverlauf, da der Folgestrom $I_B$ im Nebenstrompfad 34 kleiner der Ansprechstromstärke ist, so daß eine erneute Betätigung der Zeitsteuereinrichtung 36 durch die entsprechend dimensionierte Spule 35 nicht erfolgt. Nach einer für die Zeitsteuereinrichtung 36 charakteristischen Zeitkennlinie vorgegebenen Zeit $t_V$ beaufschlagt diese die mit ihr verbundene Entrasteinrichtung 37, welche ihrerseits die Rastvorrichtung 29 an der Hauptkontaktstelle 26 auslöst. Das auf diese Weise freigewordene bewegliche Kontaktstück 27 erreicht dadurch wieder die Schließstellung, so daß die Hauptkontaktstelle 26 wieder geschlossen und der normale Betriebszustand wieder hergestellt ist.

In diesem Zusammenhang ist darauf hinzuweisen, daß der im Nebenstrompfad 34 angeordnete zweite Überstromauslöser 38, der als Thermobimetall ausgebildet ist, für diesen Betriebsfall ein

$$\text{Auslöse-}I^2t > \int_o^{t_V} I^2 t\, dt$$

aufweist, damit es nicht zur ungewollten Auslösung des Hauptschaltwerkes 28 durch den zweiten Überstromauslöser 38 kommt.

In Figur 3 ist der Fall dargestellt, daß der Kurzschlußstrom nach der ersten Halbwelle noch nicht abgeschaltet ist. Daher wird mit der zweiten Halbwelle der Entladevorgang der Zeitsteuereinrichtung gestoppt, weil durch den anstehenden Kurzschlußstrom $I_K'$ die Zeitsteuereinrichtung 36 von der Spule 35 erneut aktiviert wird und so deren Abfall unter das Auslöseniveau s für die Entrasteinrichtung 37 verhindert. Demgemäß bleibt das bewegliche Kontaktstück 27 der Hauptkontaktstelle 26 in der Rastvorrichtung 29 gefangen, und die Hauptkontaktstelle 26 geöffnet.

Gleichzeitig kommt es zur Aufheizung des im Nebenstrompfad 34 befindlichen zweiten Thermobimetalls 38. Nach Erreichen seines Auslöseintegrals spricht der zweite Überstromauslöser 38 an und betätigt das Hauptschaltwerk 28, welches daraufhin die Öffnung der weiteren Kontaktstelle 40 im Nebenstrompfad 34 sowie die weitere Öffnung des beweglichen Kontaktstückes 27 der Hauptkontaktstelle 26 bis in die "Aus"-Stellung herbeiführt. Hierdurch ist der Kurzschlußstrom endgültig abgeschaltet.

Für den Fall, daß der Kurzschlußstrom einen vorgegebenen Wert übersteigt, muß die unverzögerte Ausschaltung sichergestellt sein. Dies wird mit Hilfe des elektromagnetischen Schnellauslösers gewährleistet, der mit dem Hauptschaltwerk 28 zusammenarbeitet. Bei Beaufschlagung des Hauptschaltwerkes durch den elektromagnetischen Schnellauslöser 30 erfolgt umgehend die Öffnung der Hauptkontaktstelle 26 sowie der zweiten Kontaktstelle 40 im Nebenstrompfad und somit des Hauptsicherungsautomaten 10.

Um beim manuellen Einschalten des Hauptsicherungsautomaten bei beliebigen Kurzschlußströmen dem betriebsmäßigen Abschalten des Gerätes von Kurzschlußströmen zu entsprechen, ist das bewegliche Kontaktstück 27 der Hauptkontakstelle 26, wie bereits erwähnt, in der Rastvorrichtung 29 gehalten. Bei Betätigung des Handschaltgriffes 42 wird zunächst die weitere Kontaktstelle 40 im Nebenstrompfad 34 geschlossen, während die Hauptkontaktstelle 26 weiterhin geöffnet bleibt, so daß es nicht zu einem Stromfluß über die Hauptkontaktstelle 26 im ersten Augenblick des Einschaltens kommen kann, sondern nur über den Nebenstrompfad ein Stromfluß zustande kommt.

Beim Einschalten sind drei unterschiedliche Betriebsfälle zu berücksichtigen. Hierbei ist davon auszugehen, daß die beiden Kontaktstellen 26, 40 jeweils geöffnet sind.

1. Einschalten auf Nennbetrieb

Soll der Hauptsicherungsautomat 10 auf Nennbetrieb eingeschaltet werden, d. h. mit eingeschalteten Verbrauchern 14, erfolgt die Entrastung der Rastvorrichtung 29 ebenfalls durch die Entrasteinrichtung 37. Ihre Aktivierung erfolgt entsprechend dem vorstehend beschriebenen zeitlichen Verlauf der Zeitsteuereinrichtung 36, die unmittelbar von dem Handschaltgriff 42 beaufschlagt wird.

2. Einschalten auf Leerlauf

Beim Einschalten des Hauptsicherungsautomaten 10 auf Leerlauf, d. h. bei abgeschaltetem Verbrauchern 14, ist ebenfalls die manuelle Aktivierung der Zeitsteuereinrichtung 36 durch Betätigung des Handschaltgriffes 42 vorgesehen, wobei hier ebenso wie beim Einschalten auf Last zunächst der Nebenstrompfad 34 eingeschaltet und dann mit entsprechender zeitlicher Verzögerung die Schließung des Hauptstrompfades 24 freigegeben ist.

3. Einschalten auf Kurzschlußstrom

Entsprechend dem zuvor beschriebenen Einschaltverlauf beim manuellen Einschalten des Hauptsicherungsautomaten ist ersichtlich, daß ein Stromfluß zunächst nur im Nebenstrompfad 34 zustande kommt, d. h., der Hauptstrompfad 24 ist aufgrund der geöffneten Hauptkontaktstelle 26 unterbrochen. Der weitere Verlauf des Einschaltvorganges entspricht dem bei der Kurzschlußstromabschaltung.

Die Spule 35 aktiviert die Zeitsteuereinrichtung 36, die entsprechend ihrer Kennlinie zunächst ihr erreichtes Energieniveau hält. Wird der Kurzschlußstrom im folgenden von einem nachgeschalteten Leitungsschutzschalter abgeschaltet, so erfolgt die Entrastung des beweglichen Kontaktstückes 27 der Hauptkontaktstelle 26 durch die Entrasteinrichtung 37, wie zuvor geschildert.

Ist der Kurzschlußstrom nicht abgeschaltet worden, so wird das Zeitsteuerelement 36 erneut von der Spule 35 aktiviert und erreicht wieder das ursprüngliche Energieniveau, so daß eine Schließung der Hauptkontaktstelle 26 unterbleibt. In der Folge spricht der zweite Überstromauslöser 38 aufgrund der Aufheizung durch den anstehenden Kurzschlußstrom an und löst über das Hauptschaltwerk 28 die Öffnung der weiteren Kontaktstelle 40 im Nebenstrompfad 34 aus und führt die weitere Öffnung des beweglichen Kontaktstückes 27 der Hauptkontaktstelle 26 bis in die "Aus"-Stellung herbei.

**Patentansprüche**

1.	Selektiver Hauptsicherungsautomat (10) zur selektiven Abschaltung von Kurzschlußströmen in elektrischen Verteilernetzen, die jeweils einzeln abgesicherte Verbraucher (14) aufweisen, wobei der Hauptsicherungsautomat zur selektiv gestaffelten Absicherung der Verbraucher (14) eines Verbrauchernetzes gegen Kurzschluß- und Überströme in einem Verbraucher (14) selektiv gegenüber den übrigen Verbrauchern (14) dient, mit einem Hauptstrompfad (34) und mit einem hierzu parallel geschalteten Nebenstrompfad (34), mit einer im Hauptstrompfad (24) angeordneten Hauptkontaktstelle (26), die wenigstens ein festes und ein bewegliches Kontaktstück aufweist, mit einem ebenfalls im Hauptstrompfad (24) angeordneten elektromagnetischen Schnellauslöser (30), der mit einem Hauptschaltwerk (28) zusammenarbeitet, welches mit dem beweglichen Kontaktstück der Hauptkontaktstelle (26) verbunden ist sowie mit einem Handschaltgriff (42) und einem im Hauptstrompfad (24) angeordneten Überstromauslöser (32) in Wirkverbindung steht, und mit je einer zugangsseitigen und einer abgangsseitigen Anschlußklemme (20, 22), dadurch gekennzeichnet, daß eine Rastvorrichtung (29) vorgesehen ist, in der das infolge Kurzschluß aufgeschlagene bewegliche Kontaktstück (27) der Hauptkontaktstelle (26) einrastet, daß der Nebenstrompfad (34), der an den Anschlußklemmen (20, 22) mit dem Hauptstrompfad (24) verbunden ist, eine Selektivitätseinrichtung (33) aufweist, die mit der Rastvorrichtung (29) zusammenarbeitet, daß die durch einen Kurzschlußstrom erregte Selektivitätseinrichtung (33) zeitgesteuert die Entrastung des beweglichen Kontaktstückes hervorruft und daß ein mit der Spule (35) in Reihe geschalteter zweiter Überstromauslöser (38) im Nebenstrompfad (34) angeordnet ist, der mit dem Hauptschaltwerk (28) zusammenarbeitet und bei Auslösung durch einen anstehenden Kurzschlußstrom selbsttätig die Öffnung einer weiteren im Nebenstrompfad (34) angeordneten Kontaktstelle (40) sowie die weitere Öffnung des Kontaktstückes (27) der Hauptkontaktstelle (26) bis in die "Aus"-Stellung herbeiführt, wodurch das Verbrauchernetz (13) vom Versorgungsnetz (16) getrennt ist.

2. Hauptsicherungsautomat nach Anspruch 1, dadurch gekennzeichnet, daß die Selektivitätseinrichtung (33) eine Zeitsteuereinrichtung (36) enthält, die von einer im Nebenstrompfad (34) angeordneten Spule (35) angeregt wird und auf eine Entrastungseinrichtung (37) wirkt, welche ihrerseits die Entrastung des beweglichen Kontaktstückes (27) der Hauptkontaktstelle (26) aus der Rastvorrichtung (29) herbeiführt, wobei die Spule (35) in Stromflußrichtung zwischen dem Abzweigpunkt (20) im Hauptstrompfad (24) und dem zweiten Überstromauslöser (38) im Nebenstrompfad (34) angeordnet ist.

3. Hauptsicherungsautomat nach einem der Ansprüche 1 oder 2, dadurch gekennzeichnet, daß die weitere Kontaktstelle (40) im Nebenstrompfad (34) zwischen dem zweiten Überstromauslöser (38) und der abgangsseitigen Anschlußklemme (22) angeordnet ist.

4. Hauptsicherungsautomat nach einem der Ansprüche 1 oder 2, dadurch gekennzeichnet, daß daß zur manuellen Einschaltbetätigung der Selektivitätseinrichtung (33) der Handschaltgriff (42) mit der Zeitsteuereinrichtung (36) gekoppelt ist.

5. Hauptsicherungsautomat nach einem der Ansprüche 1 oder 2, dadurch gekennzeichnet, daß die Spule (35) der Selektivitätseinrichtung (33) als Spannungsspule ausgelegt ist, welche erst bei höheren Stromstärken als der festgelegten Nennstromstärke eine Erregung erfährt, welche zur Betätigung der Zeitsteuereinrichtung (36) führt.

6. Hauptsicherungsautomat nach einem der Ansprüche 1, 2, 4 oder 5, dadurch gekennzeichnet, daß daß die Selektivitätseinrichtung (33) wahlweise eine mechanisch arbeitende Zeitsteuereinrichtung (36) aufweist oder eine Zeitsteuereinrichtung (36) aufweist, die aus elektronischen Bauelementen gebildet ist.

7. Hauptsicherungsautomat nach einem der vorherigen Ansprüche, dadurch gekennzeichnet, daß bei manueller Einschaltung des Hauptsicherungsautomaten (10) zunächst die weitere Kontaktstelle (40) im Nebenstrompfad (34) geschlossen wird, sowie das bewegliche Kontaktstück (27) der Hauptkontaktstelle (26) in der Rastvorrichtung (29) offengehalten wird, dann die Selektivitätseinrichtung (33) mit Hilfe des Handschaltgriffes (42) beaufschlagt wird, so daß die Schließung der Hauptkontaktstelle (26) verzögert erfolgt.

8. Hauptsicherungsautomat nach Anspruch 7, dadurch gekennzeichnet, daß die Aktivierung der Selektivitätseinrichtung (33) durch ihre Spule (35) erst bei einer Stromstärke erfolgt, die höher liegt als die Nennstromstärke.

9. Hauptsicherungsautomat nach einem der Ansprüche 7 oder 8, dadurch gekennzeichnet, daß bei Auslösung durch den elektromagnetischen Schnellauslöser (30) vom Schaltwerk (28) sowohl die Hauptkontaktstelle (26) als auch die Nebenkontaktstelle (40) im Nebenstrompfad (34) umgehend geöffnet werden, unabhängig von der Selektivitätseinrichtung (33).

## Claims

1. Selective main protective miniature circuit-breaker (10) for the selective disconnection of short-circuit current in electrical distribution networks which each have individually protected loads (14), the main protective miniature circuit-breaker being used for the selectively staggered protection of the loads (14) of a load network against short-circuit currents and over-currents in a load (14), selectively with respect to the remaining loads (14), having a main current path (24) and having an auxiliary current path (34) which is connected in parallel therewith, having a main contact point (26) which is arranged in the main current path (24) and has at least one fixed and one movable contact element, having an electromagnetic instantaneous release (30) which is likewise arranged in the main current path (24) and cooperates with a main switching mechanism (28) which is connected to the movable contact element of the main contact point (26) and is operatively connected to a manual switching handle (42) and an overcurrent release (32) arranged in the main current path (24), and having in each case one incoming and one outgoing terminal

EP 0 350 829 B1

(20, 22), <u>characterized in that</u> a latching device (29) is provided, in which the movable contact element (27), which is struck open as a result of a short circuit, of the main contact point (26) latches into place, in that the auxiliary current path (34) which is connected to the main current path (24) at the terminals (20, 22) has a selectivity device (33) which cooperates with the latching device (29), in that the selectivity device (33) which is excited by a short-circuit current brings about, in a time-controlled manner, the unlatching of the movable contact element, and in that there is arranged in the auxiliary current path (34) a second overcurrent release (38) which is connected in series with the coil (35), cooperates with the main switching mechanism (28) and, in the event of tripping due to a short-circuit current that is present, automatically brings about the opening of a further contact point (40) arranged in the auxiliary current path (34) as well as the further opening of the contact element (27) of the main contact point (26) right into the "off" position, as a result of which the load network (13) is isolated from the supply network (16).

2. Main protective miniature circuit-breaker according to Claim 1, characterized in that the selectivity device (33) contains a timing device (36) which is excited by a coil (35) arranged in the auxiliary current path (34) and acts on an unlatching device (37) which, for its part, brings about the unlatching of the movable contact element (27) of the main contact point (26) from the latching device (29), the coil (35) being arranged, in the direction of current flow, between the branch point (20) in the main current path (24) and the second overcurrent release (38) in the auxiliary current path (34).

3. Main protective miniature circuit-breaker according to one of Claims 1 or 2, characterized in that the further contact point (40) in the auxiliary current path (34) is arranged between the second overcurrent release (38) and the outgoing terminal (22).

4. Main protective miniature circuit-breaker according to one of Claims 1 or 2, characterized in that in that [sic] the manual switching handle (42) is coupled to the timing device (36) for the purpose of manual switching-on actuation of the selectivity device (33).

5. Main protective miniature circuit-breaker according to one of Claims 1 or 2, characterized in that the coil (35) of the selectivity device (33) is designed as a voltage coil which undergoes excitation, which leads to the actuation of the timing device (36), only in the event of higher current intensities than the fixed rated current intensity.

6. Main protective miniature circuit-breaker according to one of Claims 1, 2, 4 or 5, characterized in that in that [sic] the selectivity device (33) optionally has a mechanically operating timing device (36) or a timing device (36) which is formed by an electronic component.

7. Main protective miniature circuit-breaker according to one of the preceding claims, characterized in that, in the event of manual switching-on of the main protective miniature circuit-breaker (10), initially the further contact point (40) in the auxiliary current path (34) is closed, and the movable contact element (27) of the main contact point (26) is held open in the latching device (29), then the selectivity device (33) is acted on with the aid of the manual switching handle (42), with the result that the main contact point (26) is closed after a delay.

8. Main protective miniature circuit-breaker according to Claim 7, characterized in that the selectivity device (33) is activated by its coil (35) only at a current intensity which is higher than the rated current intensity.

9. Main protective miniature circuit-breaker according to one of Claims 7 or 8, characterized in that, in the event of tripping by the electromagnetic instantaneous release (30), both the main contact point (26) and the auxiliary contact point (40) in the auxiliary current path (34) are immediately opened by the switching mechanism (28), independently of the selectivity device (33).

**Revendications**

1. Disjoncteur de protection principal selectif (10) pour la coupure sélective de courants de court-circuit dans des réseaux de distribution électrique, comportant des utilisateurs (14) protégés individuellement, le disjoncteur de protection principal servant à la protection sélectivement échelonnée des utilisateurs (14) d'un réseau d'utilisateurs contre des courants de court-circuit et des courants de surintensité dans un utilisateur (14) sélectivement par rapport aux autres utilisateurs (14), comprenant un trajet de courant principal (24) et un trajet de courant secondaire (34) parallèle à ce dernier, un système de contact principal (26) disposé dans le trajet de courant principal (24) et présentant au moins une pièce de contact fixe et une pièce de contact mobile, un déclencheur rapide électromagnétique (30), qui est également disposé dans le trajet de courant principal (24), qui coopère avec un mécanisme de commutation principal (28), qui est relié a la pièce de contact mobile du système de contact principal (26) et qui se trouve en liaison active avec une manette (42) et avec un déclencheur de surintensité (32) disposé dans le trajet de courant principal (24), et une borne de raccordement d'entrée (20) et une borne de raccordement de sortie (22), caractérisé par le fait qu'il est prévu un dispositif de verrouillage (29) dans lequel se verrouille la pièce de contact mobile (27) du système de contact principal (26), ouverte par suite d'un court-circuit, que le trajet de courant secondaire (34) qui est relié au trajet de courant principal (24) sur les bornes de raccordement (20, 22) présente un dispositif de sélectivité (33) qui coopère avec le dispositif de verrouillage (29), que le dispositif de sélectivité (33) excité par un courant de court-circuit, provoque, de façon commandée dans le temps (commande temporisée), le déverrouillage de la pièce de contact mobile et qu'un deuxième déclencheur de surintensité (38) monté en série avec le solénoïde (35) est disposé dans le trajet de courant secondaire (34), ce déclencheur coopérant avec le mécanisme de commutation principal (28) et provoquant, en cas de déclenchement par un courant de court-circuit persistant, automatiquement l'ouverture d'un systeme de contact supplémentaire (40) disposé dans le trajet de courant secondaire (34) ainsi que l'ouverture supplémentaire de la pièce de contact (27) du système de contact principal (26) jusqu'à la position "coupé", ce qui fait que le réseau d'utilisateurs (13) est séparé du réseau d'alimentation (16).

2. Disjoncteur de protection principal suivant la revendication 1, caractérisé par le fait que le dispositif de sélectivité (33) contient un dispositif de commande temporisée (36) qui est excité par un solénoïde (35) disposé dans le trajet de courant principal (34) et qui agit sur un dispositif de déverrouillage (37) provoquant à son tour le déverrouillage de la pièce de contact mobile (27) du système de contact principal (26) du dispositif de verrouillage (29), le solénoide (35) étant disposé, dans le sens de passage de courant, entre le point de dérivation (20) dans le trajet de courant secondaire (24) et le deuxième déclencheur de surintensité (38) dans le trajet de courant secondaire (34).

3. Disjoncteur de protection principal suivant l'une des revendications 1 ou 2, caractérisé par le fait que le système de contact supplémentaire (40) dans le trajet de courant secondaire (34) est disposé entre le deuxième déclencheur de surintensité (38) et la borne de raccordement (22), côté sortie.

4. Disjoncteur de protection principal suivant l'une des revendications 1 ou 2, caractérisé par le fait qu'en vue de l'actionnement manuel de fermeture du dispositif de sélectivité (33), la manette (42) est couplée avec le dispositif de commande temporisée (36).

5. Disjoncteur de protection principal suivant l'une des revendications 1 ou 2, caractérisé par le fait que le solénoïde (35) du dispositif de sélectivité (33) est realisé sous forme de bobine de tension qui ne subit qu'à des intensités de courant supérieures à l'intensité de courant nominale déterminée, une excitation conduisant à l'actionnement du dispositif de commande temporisée (36).

6. Disjoncteur de protection principal suivant l'une des revendications 1, 2, 4 ou 5, caractérise par le fait que le dispositif de sélectivité (33) présente au choix un dispositif de commande temporisée (36) mécanique ou un dispositif de commande temporisée (36) formé de composants électroniques.

7. Disjoncteur de protection principal suivant l'une des revendications précédentes, caractérisé par le fait qu'en cas de fermeture manuelle du disjoncteur de protection principal (10), le système de contact supplémentaire (40) dans le trajet de courant secondaire (34) est d'abord fermé et la pièce de contact mobile (27) du système de contact principal (26) est maintenue ouverte dans le dispositif de verrouillage (29), puis le dispositif de sélectivité (33) est actionné à l'aide de la manette (42), de sorte que la fermeture du système de contact principal (26) s'effectue avec retard.

8. Disjoncteur de protection principal suivant la revendication 7, caractérisé par le fait que l'activation du dispositif de sélectivité (33) par son solénoïde (35) n'a lieu qu'à une intensité de courant qui est supérieure à l'intensité de courant nominale.

9. Disjoncteur de protection principal suivant l'une des revendications 7 ou 8, caractérisé par le fait qu'en cas de déclenchement par le déclencheur rapide électromagnétique (30), le mécanisme de commutation (28) ouvre sans retard aussi bien le système de contact principal (26) que le système de contact secondaire (40) dans le trajet de courant secondaire (34), indépendamment du dispositif de sélectivité (33).

B  13  12  A  14

6000
3

*11*

16  10  18  13

Fig. 1

Fig. 2

Fig. 3

Fig. 4